Europäisches Patentamt

**European Patent Office**

Office européen des brevets

(19)

(11) Veröffentlichungsnummer: **0 008 655**
 **B1**

(12) **EUROPÄISCHE PATENTSCHRIFT**

(45) Veröffentlichungstag der Patentschrift:
 **04.11.81**

(21) Anmeldenummer: 79102590.1

(22) Anmeldetag 23.07.79

(51) Int Cl.³ **C 09 D 7/00,** C 08 G 12/40,
 C 09 D 5/02

(54) Verwendung von Mischäthern von Methylol-Aminoharz-Kondensaten als Entschäumer für wasserverdünnbare Anstrichmittel.

(30) Priorität: 16.08.78 AT 5927/78

(43) Veröffentlichungstag der Anmeldung:
 **19.03.80 Patentblatt 80/6**

(45) Bekanntmachung des Hinweises auf die Patenterteilung:
 **04.11.81 Patentblatt 81/44**

(84) Benannte Vertragsstaaten:
 **CH DE FR GB IT NL SE**

(56) Entgegenhaltungen:
 **DE-A-1 719 404**
 **DE-A-1 801 118**
 **US-A-2 986 542**

(73) Patentinhaber: **Vianova Kunstharz Aktiengesellschaft,
 A-8402 Werndorf (AT)**

(72) Erfinder: **Staritzbichler, Werner, Dr., St. Veiter
 Strasse 28 f, A-8046 Graz (AT)**
 Erfinder: **Thausz, Robert, Kasernstrasse 77/34,
 A-8041 Graz (AT)**

(74) Vertreter: **Blum, Rudolf E. et al, c/o E. Blum & Co
 Patentanwälte Vorderberg 11, CH-8044 Zürich (CH)**

Verwendung von Mischäthern von Methylol-Aminoharz-Kondensaten
als Entschäumer für wasserverdünnbare Anstrichmittel

Die Erfindung betrifft die Verwendung wasserunlöslicher Mischäther von Methylol-Aminoharz-Kondensaten zur Verhinderung bzw. zum raschen Abbau stabiler Luftschäume in wasserverdünnbaren Anstrichmitteln.

Es ist bekannt, daß wasserverdünnbare Anstrichstoffe bei der Farbherstellung und der Applikation eine ausgeprägte Neigung zur Bildung von sehr stabilen Schäumen zeigen. Besonders störend ist dies bei Einbrennlacken, bei denen ein nur langsames Entschäumen durch den raschen Übergang vom fließfähigen Lack zum festen Film zu Störungen, wie nadelstichartigen Löchern, Bläschen oder aufgebrochenen Schaumkrusten führt.

Gemäß dem bekannten Stand der Technik kann die Entschäumung wasserlöslicher Systeme einerseits durch Zusatz von Entschäumungsmitteln oder bestimmten meist systemunverträglichen Lösungsmitteln, andererseits durch Einhaltung entsprechend langer Ablüftzeiten gefördert werden. Die üblichen Entschäumungsmittel führen in den meisten Fällen schon bei geringfügigen Fehldosierungen bei wäßrigen Lacksystemen zu Unverträglichkeitserscheinungen, was sich in der Ausbildung von sogenannten »Kratern«, d. h. dellenförmigen oft bis zum Untergrund reichenden Störungen im Lackfilm äußert. Die Beseitigung dieser Krater erfordert wiederum den Einsatz von Stoffen, welche eine starke Verminderung der Oberflächenspannung bewirken, wodurch die Schaumtendenz wieder erhöht wird.

In der DE-AS 1 719 404 werden wasserlösliche härtbare Mischäther von Methylolmelaminen oder Methylolharnstoffen, deren Methylolgruppen mit $C_4 - C_7$-Monoalkoholen sowie mit Polyäthylenglykolen mit einem Molekulargewicht von 600 bis 20 000 veräthert sind, beschrieben. Diese wasserlöslichen Mischäther werden als Dispergiermittel zum Dispergieren von wasserunlöslichen Stoffen in Wasser verwendet.

In der DE-OS 1 801 118 wird ein Verfahren zur Herstellung carboxylgruppenhaltiger härtbarer Kondensationsprodukte beschrieben, wobei die Produkte ebenfalls wasserlöslich sind. Diese Produkte werden erhalten, indem man die Methylolgruppen von Aminoplast-Vorkondensaten mit Monohydroxyverbindungen und aliphatischen Hydroxycarbonsäuren veräthert und anschließend in einem alkalischen Medium die Carbonsäureestergruppen verseift. Gegebenenfalls können die verätherten Produkte vor der alkalischen Verseifung noch mit einem hydroxylgruppenhaltigen Amin umgeäthert werden. Wie aus Seite 7, dritter Absatz dieser DE-OS 1 801 118 ersichtlich ist zeigen die klaren bis schwach trüben wäßrigen Lösungen dieser Produkte eine Schaumkraft, ein Waschvermögen, eine Emulgier- und Dispergierwirkung. Auch in Beispiel 1 und Beispiel 3 dieser Veröffentlichung wird darauf hingewiesen, daß die wäßrigen Lösungen dieser Produkte stark schäumen bzw. ein erhebliches Waschvermögen und Schaumvermögen besitzen.

Überraschenderweise wurde nun gefunden, daß man ausgehend von Methylolmelaminen, Methylolharnstoffen oder Methylolguanaminen durch Verätherung von deren Methylolgruppen mit Monoalkoholen härtbare Mischäther erhalten kann, die zum Unterschied von den in der DE-AS 1 719 404 und der DE-OS 1 801 118 beschriebenen Produkten wasserunlöslich sind. Besonders überraschend ist dabei, daß die Produkte zum Unterschied von den in der DE-AS 1 719 404 beschriebenen schäumenden Produkte als schaumverhindernde Zusatzmittel und wäßrigen Medien verwendet werden können. Diese Produkte dienen in wasserverdünnbaren Anstrichsystemen als Entschäumungsmittel und besitzen im Vergleich zu bisher in diesem Verwendungsgebiet eingesetzten Entschäumungsmitteln eine wesentlich reduzierte Tendenz zur Kraterbildung.

Die vorliegende Erfindung betrifft daher die Verwendung von wasserunlöslichen, härtbaren Mischäthern von Methylolmelaminen, Methylolharnstoffen oder Methylolguanaminen, deren Methylolgruppen mit Monoalkoholen mit 4 bis 18 Kohlenstoffatomen veräthert sind und deren Lösungen eine Benzinverträglichkeit von mindestens 1 : 0,5, vorzugsweise zwischen 1 : 2 und 1 : 40, und eine Glycerin-Methanolverträglichkeit zwischen 5 : 1 und 1 : 3 aufweisen, in einer Menge im Bereich von 0,1 bis 20 Gew.-%, berechnet als Feststoff und bezogen auf den Bindemittelfeststoffanteil des Anstrichmittels, als Zusatzmittel in wasserverdünnbaren Anstrichmitteln zum Zwecke der Verhinderung von Luftschäumen oder deren beschleunigten Abbaues.

Die erfindungsgemäß verwendeten wasserunlöslichen, härtbaren Mischäther haben ganz bestimmte charakteristische hydrophil-hydrophobe Eigenschaften. Diese sind durch die angeführten Bereiche der Benzinverträglichkeit bzw. der Glycerin/Methanolverträglichkeit definiert.

Die Bestimmung der Benzinverträglichkeit bzw. der Glycerin/Methanolverträglichkeit ist eine in der Praxis allgemein bekannte Methode zur Verfolgung des Reaktionsverlaufes bei der Verätherung von Aminoharzen. Es sei in diesem Zusammenhang auf das Buch »Chemische Technologie« von Winnacker-Küchler, Band 5, Organische Technologie, C. Hanser Verlag 1972, Seite 434, letzter Absatz verwiesen. Dort wird beispielsweise klargelegt, daß bei einer Verätherung der Methylolgruppen mit Butanol bei fortschreitender Butylierung die Benzinverträglichkeit zunimmt, während die Methanolverträglichkeit abnimmt.

Wenn dann Aminoharze, die mit Alkoholen mit 4 bis 18 Kohlenstoffatomen veräthert sind, einer Umätherung mit Polyäthylenglykol unterworfen werden, dann nehmen mit steigendem Umätherungsgrad mit dem Polyäthylenglykol die hydrophilen Eigenschaften des Harzes wieder zu, d. h. die Benzinverträglichkeit nimmt ab und sinkt schließlich auf Null ab, während gleichzeitig die Glycerin/Methanolverträglichkeit zunimmt und schließlich den Wert Unendlich erreicht.

Wie bereits erwähnt wurde, müssen die erfindungsgemäß zu verwendenden Mischäther eine Benzinverträglichkeit von mindestens 1 : 0,5 aufweisen, wobei dieser Wert natürlich in gleicher Weise als 2 : 1 ausgedrückt werden kann. Dabei versteht man unter der Benzinverträglichkeit, daß die bei der Umätherungsreaktion vorliegende Lösung bei Zimmertemperatur zumindestens im Verhältnis von einem Teil der Mischätherlösung zu 0,5 Teilen einer Benzinfraktion eine einwandfreie klare Lösung ergibt. Die bei diesem Test verwendete Benzinfraktion hat einen Siedebereich von 130 bis 175° C, einen Anilinpunkt von 53° C, einen Kauri-Butanolwert von 39 und einen Aromatengehalt von etwa 18 Vol.-%. Bei dem Test für die Benzinverträglichkeit ist der Einfluß der Art und der Menge der meist vorhandenen alkoholischen Lösungsmittel bei denjenigen Produkten wie sie üblicherweise hergestellt werden oder im Handel erhältlich sind weitgehend ohne Bedeutung.

Vorzugsweise soll die nach diesem Verfahren bestimmte Benzinverträglichkeit der erfindungsgemäß zu verwendenden Mischäther im Bereich von 1 : 2 bis 1 : 40 liegen.

Wie bereits erwähnt wurde, müssen die erfindungsgemäß zu verwendenden Mischäther außerdem eine Glycerin/Methanolverträglichkeit aufweisen, die im Bereich von 5 : 1 bis 1 : 3 liegt. Bei der Prüfung der Glycerin/Methanolverträglichkeit wird das Reaktionsgemisch, welches einen Feststoffgehalt von etwa 40% aufweist, bei Zimmertemperatur mit einer 1 : 1-Mischung aus Glycerin und Methanol gemischt, wobei sich eben in den Mischungsbereichen von 5 : 1 bis 1 : 3 eine einwandfreie klare Mischung ergeben muß.

Für die erfindungsgemäße Verwendung bevorzugte Mischäther von Methylolmelaminen, Methylolharnstoffen oder Methylolguanaminen sind diejenigen, deren Methylolgruppen anteilweise mit Monoalkoxymono-, -oligo- oder -polyalkylenglykolen mit Molekulargewichten bis 4000, vorzugsweise im Bereich von 76 bis 4000, veräthert sind. Diese Produkte werden im allgemeinen hergestellt, indem man ein Aminoharz, das mit Alkoholen mit 4 bis 18 Kohlenstoffatomen veräthert ist, welches nicht wasserlöslich ist und zu geringe hydrophile Anteile aufweist, einer Umätherung mit einem entsprechenden Polyäthylenglykol unterwirft, bis in diese Harze eine ausreichende Menge an hydrophilen Polyäthylenglykoleinheiten eingebaut sind, so daß die Benzinverträglichkeit und die Glycerin/Methanolverträglichkeit in den benötigten Bereich gebracht wird, und dennoch die Wasserunlöslichkeit dieser Produkte aufrecht erhalten wird. In diesem Fall wird die gewünschte entschäumende Wirkung und keine dispergierende Wirkung erreicht. Es sei in diesem Zusammenhang hervorgehoben, daß in der DE-AS 1 719 404 ebenfalls, wie bereits erwähnt wurde, Methylolmelamine oder Methylolharnstoffe beschrieben sind, deren Methylolgruppen mit Monoalkoholen mit 4 bis 7 Kohlenstoffatomen und mit Polyäthylenglykolen mit einem Molekulargewicht von 600 bis 20 000 veräthert sind. Die dort beschriebenen Produkte unterscheiden sich jedoch von den hier erwähnten bevorzugt zu verwendenden Produkten dahingehend, daß durch die Einführung höherer Anteile von hydrophilen Polyäthylenglykolgruppierungen die hydrophilen Anteile in dem Molekül so stark erhöht sind, daß die Produkte wasserlöslich werden und auch keine entschäumende Wirkung sondern im Gegensatz dazu eine dispergierende Wirkung besitzen.

Weitere für die erfindungsgemäße Verwendung bevorzugte Produkte sind die Mischäther von Methylolaminen, Methylolharnstoffen oder Methylolguanaminen, deren Methylolgruppen anteilweise mit Hydroxycarbonsäuren veräthert sind. Beispiele für Hydroxycarbonsäuren, die zu diesem Zwecke eingesetzt werden können, sind Milchsäure oder Salicylsäure. Gegebenenfalls können bei derartigen Mischäthern die Methylolgruppen anteilweise sowohl mit Hydroxycarbonsäuren als auch mit Glykolen der weiter oben genannten Art veräthert sein, damit eben die angestrebten hydrophilen-hydrophoben Eigenschaften erzielt werden.

Bei der erfindungsgemäßen Verwendung werden die Mischäther vorzugsweise in einer Menge im Bereich von 0,3 bis 5 Gew.-%, berechnet als Feststoff und bezogen auf den Bindemittelfeststoffanteil des Anstrichmittels, eingesetzt.

Ein besonderer Vorteil der erfindungsgemäß verwendeten Zusatzmittel liegt in ihrer Fähigkeit, mit den üblichen Bindemitteln welche in wasserverdünnbaren Einbrennlacksystemen eingesetzt werden, zu reagieren und damit zum Filmaufbau beizutragen. Dadurch wird auch vermieden, daß nichtgebundene Substanzen im vernetzten Film verbleiben, welche die Filmeigenschaften, insbesondere die Zwischenschichthaftung, negativ beeinflussen.

Die Herstellung der geeigneten Mischäther erfolgt in bekannter Weise vorteilhaft durch Umätherung von $C_1 - C_4$-Methyloläthern des Melamins, Harnstoffs, Bezoguanamins etc. mit einem oder mehreren längerkettigen Monoalkoholen mit bis zu 18 Kohlenstoffatomen, gegebenenfalls und vorzugsweise zusammen mit bis zu 90 Mol-% eines Monoalkoxymono-, -oligo- oder -polyalkylenglykols mit einem Molekulargewicht zwischen 76 und 4000 oder gegebenenfalls zusammen mit einer Hydroxycarbonsäure. Der Fortschritt der Reaktion wird durch die Verträglichkeitsproben verfolgt.

Die erfindungsgemäß verwendeten Mischäther werden in Mengen von 0,1 bis 20 Gew.-% berechnet als Feststoff und bezogen auf den Bindemittelfeststoffanteil des Anstrichmittels eingesetzt. Vorzugsweise beträgt die eingesetzte Menge 0,3 bis 5 Gew.-%. Eine gute Einmischung des Entschäumers ist für die optimale Wirksamkeit von wesentlicher Bedeutung. Die Zugabe erfolgt daher zweckmäßig in verdünnter Lösung, wobei als Lösungsmittel insbesonders Glykoläther, aber auch nicht mit Wasser mischbare Lösungsmittel wie Benzinkohlenwasserstoffe verwendet werden.

Die folgenden Beispiele erläutern die Erfindung. Sofern nicht anders angegeben sind Teile Gewichtsteile und Prozente Gewichtsprozente.

## Herstellung der Mischäther:

(A) 182 g eines handelsüblichen Harnstoff-Formaldehyd-Kondensates, dessen Methylolgruppen mit n-Butanol weitgehend veräthert sind (Festkörpergehalt 55%, Viskosität 300 s, DIN 53 211/20°C) werden mit 100 g Isononanol und 50 g Diäthylenglykolmonomethyläther auf 70°C erwärmt und bei dieser Temperatur unter Vakuum gehalten bis 82 g Destillat erhalten wurden. Anschließend wurde die Temperatur ohne Vakuum auf 80°C erhöht und die Reaktion etwa 7 Stunden weitergeführt. Der erhaltene Mischäther zeigt eine Benzinverträglichkeit von 1 : 14 und eine Glycerin/Methanolverträglichkeit von 1 : 1,2. Für die Verwendung werden 250 g der Mischätherlösung mit 750 g Äthylenglykolmonobutyläther verdünnt.

Die Benzinverträglichkeit wird, wie vorne beschrieben, mit einer Benzinfraktion mit den Siedegrenzen 130—175°C, einem Anilinpunkt von 53°C, einem Kauri-Butanolwert von 39 und einem Aromatengehalt von ca. 18 Vol.-% durchgeführt.

Für die Glycerin/Methanol-Verträglichkeit wird eine 1 : 1-Mischung der beiden Stoffe herangezogen. Der angegebene Verträglichkeitswert ist ein Grenzwert, bei dem eine einwandfreie klare Lösung vorliegt.

(B) In analoger Weise, wie unter (A) beschrieben, wird eine Mischätherlösung aus 164 g des oben erwähnten Harnstoff-Formaldehydharzes, 100 g Isononanol und 10 g Polyäthylenglykol (Molekulargewicht ca. 600) hergestellt. Die Destillatmenge beträgt 74 g, die Benzinverträglichkeit 1 : 11,5 und die Glycerin/Methanolverträglichkeit 3 : 1. 200 g des Mischäthers werden mit 800 g Lackbenzin verdünnt.

(C) In analoger Weise werden 182 g Harnstoff-Formaldehydharz, 75 g Diäthylenglykolmonomethyläther und 75 g Linolenalkohol (gewonnen durch partielle Hydrierung aus technischer Leinölfettsäure, Jodzahl 150—170) umgesetzt. Es wurden 82 g Destillat abgetrennt. Die Benzinverträglichkeit liegt bei 1 : 2,8, die Glycerin/Methanolverträglichkeit bei 5 : 1. Zur Verwendung werden 250 g dieser Lösung mit 750 g Äthylenglykolmonobutyläther verdünnt.

## Beispiel 1

### Entschäumung von Klarlacken

In einer halbgefüllten, verschlossenen Glasflasche werden Klarlacke auf verschiedener Bindemittelbasis 1 Minute kräftig geschüttelt. Gemessen wird die Zeit bis zum Aufbrechen der gebildeten Schaumkrone bei Zimmertemperatur bzw. bei 40°C.

### Klarlack 1

100 Teile einer 80%igen Lösung eines wasserlöslichen ölmodifizierten Alkydharzes mit einer Säurezahl von 60 mg KOH/g werden mit 33 Teilen eines wasserlöslichen, partiell mit Methanol verätherten Melaminharzes (60%ig in Lösungsmittel), 27 Teilen Äthylenglykolmonobutyläther und 9,5 Teilen Dimethyläthanolamin vermischt und mit deionisiertem Wasser auf einen Festkörpergehalt von 30% verdünnt (Viskosität entsprechend einer Auslaufzeit von 20 s gemäß DIN 53 211/20°C).

### Klarlack 1a

150 Teile Klarlack 1 werden mit 4,5 Teilen der Lösung von Mischäther (A) gründlich gemischt.

### Klarlack 2

106 Teile einer 80%igen Lösung eines wasserlöslichen ölfreien gesättigten Polyesters werden mit 15 Teilen Hexamethoxymethylmelamin, je 12 Teilen Diäthylenglykolmonobutyläther und Äthylenglykolmonobutyläther und 8,5 Teilen Dimethyläthanolamin gemischt und mit deionisiertem Wasser auf 25% Festkörpergehalt verdünnt (Viskosität ca. 20 s, DIN 53 211/20°C).

### Klarlack 2a

Zu 200 Teilen Klarlack 2 werden 5 Teile der Lösung des Mischäthers (A) zugegeben und gründlich gemischt.

### Klarlack 3

160 Teile einer 50%igen wäßrigen Emulsion eines ölmodifizierten Alkydharzes werden nach Zugabe von 20 Teilen Hexamethoxymethylmelamin mit Wasser auf ca. 45% verdünnt (Viskosität 20 s, DIN 53 211/20° C).

### Klarlack 3a

Zu 100 Teilen Klarlack 3 werden 4,5 Teile der Lösung des Mischäthers (A) zugemischt.

### Ergebnisse der Entschäumungsversuche

Angegeben ist die Zeit in Minuten bis zum Aufbrechen der Schaumkrone nach 1 Minute intensivem Schütteln.

| | Klarlack | | | | | |
| | 1 | 1 a | 2 | 2 a | 3 | 3 a |
|---|---|---|---|---|---|---|
| Zimmertemperatur | 17 | 2 | 180 | 15 | über 180 | 20 |
| 40°C | 15 | 0,5 | 170 | 7 | über 180 | 50 |

### Beispiel 2

### Entschäumung von Tauchgrundierungen

Die verdünnte Tauchlacklösung wird 1 Minute geschüttelt, anschließend wird ein gereinigtes Stahlblech (100 × 150 mm) in der Lacklösung getaucht und nach einer Ablüftzeit von 3 Minuten eingebrannt. Beurteilt werden die Oberflächeneigenschaften der grundierten Bleche.

### Tauchlack 1

Eine in üblicher Weise auf einer Dreiwalze hergestellte Anreibpaste aus 75 Teilen einer 80%igen Lösung eines wasserlöslichen ölmodifizierten Alkydharzes, 10 Teilen Äthylenglykolmonobutyläther, 50 Teilen Blanc fixe, 50 Teilen Lithopone (30%), 10 Teilen Bleichromat und 5 Teilen Farbruß wird mit 25 Teilen des obengenannten Alkydharzes, 40 Teilen eines wasserlöslichen, partiell mit Methanol verätherten Melaminharzes (50%ige Lösung), 5 Teilen Äthylenglykolmonobutyläther, 5 Teilen n-Butanol, 9 Teilen Dimethyläthanolamin komplettiert und mit Wasser auf einen Festkörpergehalt von ca. 50% verdünnt.

### Tauchlack 1a

Zu 200 Teilen des Tauchlackes 1 werden 4,6 Teile der Lösung des Mischäthers (B) zugesetzt und gründlich eingemischt.

### Tauchlack 2

57 Teile eines wasserlöslichen phenolmodifizierten Alkydharzes (in 70%iger, mit Ammoniak neutralisierter Lösung) werden mit 5 Teilen Äthylenglykolmonobutyläther verdünnt und mit 50 Teilen Blanc fixe, 50 Teilen Lithopone (30%), 10 Teilen Bleisilicochromat und 5 Teilen Farbruß zu einer Farbpaste vermahlen. Nach Zugabe weiterer 86 Teile des phenolmodifizierten Alkydharzes wird der Ansatz mit 5 Teilen n-Butanol und ca. 300 Teilen Wasser auf einen Festkörpergehalt von 38% verdünnt.

Tauchlack 2a

250 Teile Tauchlack 2 werden mit 4,4 Teilen der Lösung des Mischäthers (B) innig vermischt.

Beurteilung der eingebrannten Filme

|  | Tauchlack 1 | Tauchlack 2 |
|---|---|---|
| Fläche | Schaumnester, unruhig | viele Schaumnester, unruhig |
| Läuferbildung | stark | sehr stark |
| Krater | vereinzelt | keine |

|  | Tauchlack 1 a | Tauchlack 2 a |
|---|---|---|
| Fläche | in Ordnung | in Ordnung |
| Läuferbildung | keine | sehr gering |
| Krater | keine | keine |

Beispiel 3

Erhöhung der »Kochgrenze« bei Einbrennlacken durch die erfindungsgemäßen Mischäther

Unter Kochgrenze wird diejenige Schichtstärke verstanden, welche beim Spritzauftrag erzielt werden kann, ohne daß Filmstörungen durch aufgeplatzte Bläschen durch das Austreten der Lösungsmittel beobachtet werden können.

Zur Prüfung werden Filme mit verschiedenen Schichtstärken gespritzt. Die Bleche werden nach 5 Minuten Abluftzeit in horizontaler Lage eingebrannt.

Einbrennlack 1

Eine Farbpaste wird aus 75 Teilen einer 80%igen Lösung eines wasserverdünnbaren Alkydharzes, welches mit 10 Teilen Äthylenglykolmonobutyläther verdünnt wurde, 70 Teilen Titandioxid (Rutil), 65 Teilen Blanc fixe und 0,3 Teilen Farbruß auf einer 3-Walze hergestellt. Die Paste wird mit weiteren 31,3 Teilen des Alkydharzes, 15 Teilen Hexamethoxymethylmelamin, 6 Teilen Diäthylenglykolmonobutyläther, 8 Teilen Äthylenglykolmonoäthyläther und 9,4 Teilen Dimethyläthanolamin komplettiert. Der so erhaltene Füllerlack wird mit deionisiertem Wasser auf einen Festkörpergehalt von ca. 42% verdünnt.

Einbrennlack 1a

250 Teile des verdünnten Einbrennlackes 1 werden mit 4,4 Teilen der Lösung des Mischäthers (C) innig vermischt.

Einbrennlack 2

150 Teile einer 50%igen wäßrigen Alkydharzemulsion werden mit 27,8 Teilen eines wasserverdünnbaren mittelreaktiven Melaminharzes (90%ig) gemischt und mit 80 Teilen Titandioxid (Rutil) vermahlen. Nach Verdünnen mit 45 Teilen deionisiertem Wasser resultiert ein Decklack mit einem Festkörpergehalt von ca. 59%.

0 008 655

Einbrennlack 2a

:s verdünnten Einbrennlackes 2 werden 5 Teile des Mischäthers (C) zugesetzt

abelle zeigt die Erhöhung durch die erfindungsgemäß verwendeten

ben und gründlich

|  | Einbrennlack | | | |
|---|---|---|---|---|
|  | 1 | 1 a | 2 | 2 a |
| nze bei ʋm ke | 33 | 50 | 28 | 60 |

ʒrden nach Zugabe
iskosität 20 s, DIN

ght.

wasserunlöslichen, härtbaren Mischäthern von Methylolmelaminen,
ʒr Methylolguanaminen, deren Methylolgruppen mit Monoalkoholen mit 4 bis
ʒräthert sind und deren Lösungen eine Benzinverträglichkeit von mindestens
ischen 1 : 2 und 1 : 40, und eine Glycerin-Methanolverträglichkeit zwischen
in einer Menge im Bereich von 0,1 bis 20 Gew.-%, berechnet als Feststoff und
ʃittelfeststoffanteil des Anstrichmittels, als Zusatzmittel in wasserverdünnba-
Zwecke der Verhinderung von Luftschäumen oder deren beschleunigten

Minute intensivem

ʔatentanspruch 1, dadurch gekennzeichnet, daß man solche Mischäther von
ʒhylolharnstoffen oder Methylolguanaminen verwendet, deren Methylolgrup-
oalkoxymono-, -oligo- oder -polyalkylenglykolen mit Molekulargewichten bis

3 a

20

50

ʔatentanspruch 1, dadurch gekennzeichent, daß man solche Mischäther von
ʒhylolharnstoffen oder Methylolguanaminen verwendet, deren Methylolgrupoxycarbonsäuren veräthert sind.
ʔatentanspruch 1, dadurch gekennzeichnet, daß man die Mischäther in einer
n 0,3 bis 5 Gew.-%, berechnet als Feststoff und bezogen auf den
il des Anstrichmittels verwendet.

rd ein gereinigtes
eit von 3 Minuten
e.

uble, hardenable mixed ethers of methylolmelamines, methylol ureas or
ʒ methylol groups of which are etherified with monoalcohols with from 4 to 8
ʃlutions of which have a white spirit tolerance of at least 2 : 1, preferably of
ınd a glycerol/methanol tolerance of between 5 : 1 and 1 : 3, as additives for
ʒmpositions to prevent cissing and bubbling or to accelerate air release.
ɔf methylolmelamines, methylol ureas or methylol guanamines, the methylol
ʒrified, in portions, with monoalkoxy monoalkylene glycols, monoalkoxyolinoalkoxypolyalkylene glycols, with a molecular weight of up to 4000, for the

ilen einer 80%igen
monobutyläther, 50
ʾarbruß wird mit 25
tiell mit Methanol
tyläther, 5 Teilen
stkörpergehalt von

of methylol melamines, methylol ureas or methylol guanamines, the methylol
erifield, in portions, with hydroxycarboxylic acids, for the purpose cited in

of methylol melamines, methylol ureas or methylol guanamines in a quantity
by weight, preferably 0.3 to 5% by weight, calculated as solids and on binder
position, for the purpose cited in claim 1.

ı (B) zugesetzt und

dditifs pour peintures diluables dans l'eau, empêchant la formation d'écume
ːtion accélérée de cette écume, d'éthers combinés, insolubles dans l'eau et
l mélamines, de méthylol urées ou de méthylol guanamines, dont les groupes
par des monoalcools comportant de 4 à 18 atomes de carbone, et dont les
compatibilié avec la white spirit d'au moins 1 : 0,5, et de préférence comprise
compatibilité avec le mélange glycérine/méthanol de 5 : 1 à 1 : 3, à raison de

ʒr, mit Ammoniak
t und mit 50 Teilen
ı Farbruß zu einer

7

0,1 à 20% en poids de matière solide par rapport au poids du composant solide du liant de la peinture.

2. Utilisation selon la revendication 1, caractérisés en ce que l'on utilise des éthers combinés de méthylol mélamines, méthylol urées ou méthylol guanamines dont les groupes méthylol sont éthérifiées en partie des monoalkoxymonoalkylène glycols, des monoalkoxyologoalkylène glyols ou des monoalkoxypolyalkylène glycols, ayant des poids moléculaires puvant atteindre 4000.

3. Utilisation selon la revendication 1, caractérisés en ce que l'on utilise des éthers combinés de méthylol mélamines, méthylol urées ou méthylol guanamines dont les groupes méthylol sont éthérifiés en partie par des acides hydroxycarboxyliques.

4. Utilisation selon la revendication 1, caractérisés en ce que l'on utilise les éthers combinés à raison de 0,3 à 5% en poids, de matière solide par rapport au poids du composant solide du liant de la peinture.